# EUROPEAN PATENT APPLICATION

(11) **EP 1 936 958 A1**
(43) Date of publication of application: **25.06.2008**
(21) Application number: 07115215.1
(22) Date of filing: 29.08.2007
(51) Int. Cl.: H04N 5/44

(54) **A device for capturing images and a control method thereof**

(30) Priority: 22.12.2006 KR 20060133145
(71) Applicant: Samsung Electronics Co., Ltd., Suwon-si, Gyeonggi-do 442-743 (KR)
(72) Inventor: Kim, Je-ik, Gyeonggi-do (KR)
(74) Representative: Clark, Charles Robert

(57) **Abstract**

An image device for capturing a still image and a control method thereof are provided. The image device includes a storage unit for storing compressed pictures of a moving image, and a control unit for extracting at least one of the compressed pictures, which corresponds to a scene selected from the moving image being displayed, from the storage unit. Accordingly, in extracting the still image from the moving image, a data processing time can be reduced and deterioration of a picture quality of an image can be prevented.

## Description

Apparatuses and methods consistent with the present invention relate to an image-capturing device and a control method thereof. More particularly, but not exclusively, the present invention relates to an image device for capturing a still image and a control method thereof.

An image-capturing device (referred to hereafter as the image device) is a device that reproduces an image recorded in a recording medium and/or records an image transmitted from an external device. Generally, the image device is used to reproduce and/or record a moving image rather than a still image, and MPEG (Moving Picture Experts Group) is a moving image compression technology.

A picture prescribed in the MPEG standard is divided into three types: I-picture (Intra-coded picture), P-picture (Predicted-coded picture), and B-picture (Bidirectionally predicted-coded picture). I-picture is decoded by simply performing a DCT transform thereof without using motion compensation. P-picture is motion-compensated based on I-picture or another P-picture and then the remaining difference is DCT-transformed. Unlike P-picture, B-picture is motion-compensated from two frames positioned in front and in rear of the B-picture on a time axis.

On the other hand, a user can capture a specified scene as a still image while a moving image is reproduced using pictures prescribed in the MPEG standard. In generating a still image from the selected scene, an image device encodes a captured scene, i.e., a captured frame, in JPEG that is a compression format of a still image. In this case, a printer decodes the encoded image and outputs the still image.

As described above, since a scene captured from a moving image is outputted as a still image by encoding the captured scene in JPEG and then decoding the encoded scene, it takes a lot of time to repeat the encoding and decoding operation and the picture quality of the image deteriorates.

Exemplary embodiments of the present invention have been developed in order to address the above and other problems associated with the conventional arrangement. An aim of embodiments of the present invention is to provide an image device and a control method thereof, which can minimize the deterioration of a picture quality of an image and reduce the data processing time.

The foregoing and other aspects are substantially realized by providing an image device, according to exemplary embodiments of the present invention, which comprises a storage unit for storing compressed pictures of a moving image; and a control unit for extracting at least one of the compressed pictures, which corresponds to a scene selected from the moving image being displayed, from the storage unit. The compressed pictures may comprise Moving Picture Experts Group (MPEG)-encoded compressed pictures.

The image device according to exemplary embodiments of the present invention may further comprise a transmission unit for transmitting the extracted pictures.

The control unit may extract less than three compressed pictures that correspond to the selected scene.

The control unit may extract at least one of a compressed I-picture (Infra-coded picture) and a compressed P-picture (predicted-coded picture), which correspond to the selected scene, from the storage unit in the case where the I-picture and the P-picture are used to display the selected scene.

The control unit may extract at least one of a compressed I-picture (Intra-coded picture), a compressed P-picture (predicted-coded picture), and a compressed B-picture (Bidirectionally predicted-coded picture), which correspond to the selected scene, from the storage unit in the case where the I-picture, the P-picture, and the B-picture are used to display the selected scene.

According to another aspect of exemplary embodiments of the present invention, there is provided an image system including a transmitter and a receiver; wherein the transmitter comprises a storage unit for storing compressed pictures of a moving image; a transmission unit for transmitting the pictures; and a control unit for extracting at least one of the compressed pictures, which corresponds to a scene selected from the moving image being displayed, from the storage unit, and transmitting the extracted pictures through the transmission unit; and wherein the receiver comprises a reception unit for receiving the transmitted pictures; and a still image generation unit for generating a still image using the received pictures.

According to still another aspect of exemplary embodiments of the present invention, there is provided a method of controlling an image device, which comprises storing compressed pictures of a moving image; and extracting at least one of the compressed pictures, which corresponds to a scene selected from the moving image being displayed.

The compressed pictures may comprise Moving Picture Experts Group (MPEG)-encoded compressed pictures.

The method according to exemplary embodiments of the present invention may further comprise transmitting the extracted pictures.

The extracting step may comprise extracting three and less compressed pictures that correspond to the selected scene.

The extracting step may comprise extracting at least one of a compressed I-picture (Intra-coded picture) and a compressed P-picture (predicted-coded picture), which correspond to the selected scene, in the case where the I-picture and the P-picture are used to display the selected scene.

The extracting step may comprise extracting at least one of a compressed I-picture (Intra-coded picture), a compressed P-picture (predicted-coded picture), and a compressed B-picture (Bidirectionally predicted-coded picture), which correspond to the selected scene, in the case where the I-picture, the P-picture, and the B-picture are used to display the selected scene.

According to still another aspect of exemplary embodiments of the present invention, there is provided a method of transmitting/receiving an image including an image transmitting method and an image receiving method; wherein the image transmitting method comprises storing compressed pictures of a moving image; extracting at least one of the compressed pictures, which corresponds to a scene selected from the moving image being displayed; and transmitting the extracted pictures; and wherein the image receiving method comprises receiving the extracted pictures; and generating a still image using the received pictures.

Embodiments of the present invention are now described by way of example and with reference to the accompany drawings, of which:
Figure 1 is a block diagram illustrating the construction of an image system according to an exemplary embodiment of the present invention;
Figure 2 is a flowchart illustrating a process of transmitting a scene selected from a moving image being reproduced as a still image according to an exemplary embodiment of the present invention;
Figure 3 is a flowchart illustrating a process of generating a still image using received pictures according to an exemplary embodiment of the present invention;
Figure 4 is a block diagram illustrating the construction of an image device according to another exemplary embodiment of the present invention;
Figure 5 is a flowchart illustrating a process of extracting pictures corresponding to a scene selected from a moving image, which is performed by the image device illustrated in Figure 4;
Figure 6 is a block diagram illustrating the construction of an image system according to still another exemplary embodiment of the present invention; and
Figure 7 is a flowchart illustrating a process of transmitting/receiving a scene selected from a moving image as a still image, which is performed by the image system illustrated in Figure 6.

Throughout the drawings, like reference numerals will be understood to refer to like parts, components and structures.

Exemplary embodiments of the present invention will now be described in detail with reference to the annexed drawings. In the drawings, the same elements are denoted by the same reference numerals throughout the drawings. In the following description, detailed descriptions of known functions and configurations incorporated herein have been omitted for conciseness and clarity.

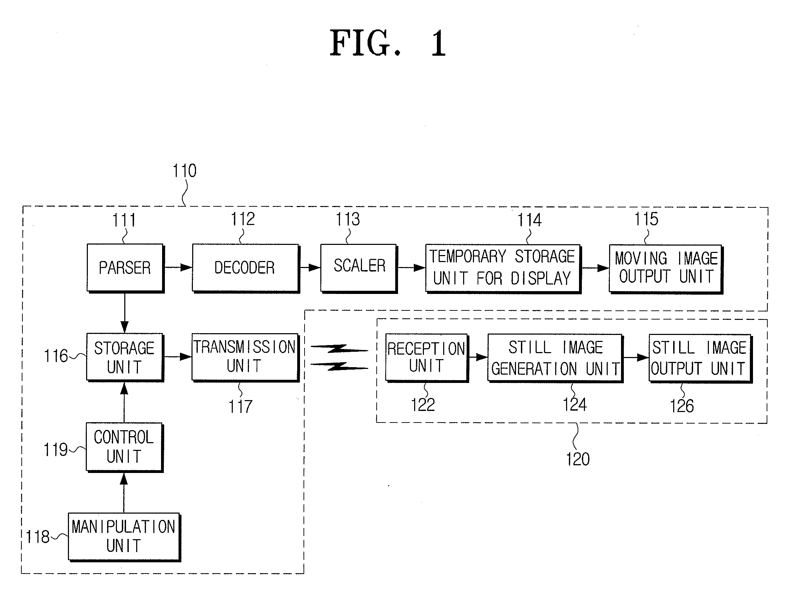

Figure 1 is a block diagram illustrating the construction of an image system according to an exemplary embodiment of the present invention.

Referring to Figure 1, the image system according to an exemplary embodiment of the present invention may comprise an image device 110 as a transmitter and a printer 120 as a receiver. The image device 110 comprises a parser 111, a decoder 112, a scaler 113, a temporary storage unit 114 for display, a moving image output unit 115, a storage unit 116, a transmission unit 117, a manipulation unit 118, and a control unit 119.

The parser 111 parses compressed pictures included in an image signal recorded in a DVD or an HDD or a broadcasting signal received by wire/wireless, and applies the parsed pictures to the decoder 112 or the storage unit 116.

The decoder 112 generates an image in the unit of a decoded frame by using the compressed pictures applied from the parser 111 and applies the generated image to the scaler 113. For example, although the decoder generates one decoded frame image using a compressed I-picture (Intra-coded picture), it generates one frame image by using both a compressed P-picture (Predicted-coded picture) and its preceding I-picture in order to generate the frame image by using the compressed P-picture.

The scaler 113 converts the applied decoded frame image so that the resolution of the decoded frame image coincides with the resolution of the image device 110. That is, the scaler 113 enlarges or reduces the input image to make the size of the input image conform to the size of the scene being displayed.

The temporary storage unit 114 for display temporarily stores the scaled images applied from the scaler 113 to output the applied images to the moving image output unit 115.

The moving image output unit 115 outputs the scaled image applied from the temporary storage unit 114 to an internal display unit or an external display unit. Specifically, i) the output of the image to the internal display unit is performed through a process in which a display driving unit displays the applied image on the display unit, and ii) the output of the image to the external display unit is performed through a process in which the image transmission unit transmits the applied image to the external display unit (e.g., external TV).

The storage unit 116 temporarily stores the compressed pictures using the result of parsing performed by the parser 111, and the transmission unit 117 may comprise an interface for transmitting the compressed pictures applied from the storage unit 116 to an external device.

The manipulation unit 118 receives and transfers a user's manipulation command to the control unit 119, and may be provided in a body with or separately from the image device 110. The manipulation unit 118 may comprise a remote controller for inputting the user's manipulation command and a light-receiving unit for receiving and transferring an output signal of the remote controller to the control unit 119. In addition, the manipulation unit 118 may comprise a user interface for inputting the user's command through a menu screen.

The control unit 119 controls the operation of the image device 110 in accordance with the user's manipulation command input through the manipulation unit 118.

In particular, the control unit 119 extracts the compressed pictures corresponding to the selected specified scene from the storage unit 116. Specifically, if the selected scene includes a frame composed of I-picture, the control unit 19 decodes the I-picture being displayed on the selected scene, and extracts the compressed I-picture, before being decoded and scaled, from the storage unit 116. On the other hand, if the selected scene includes a frame composed of I-picture and P-picture, the control unit 119 extracts the compressed I-picture and P-picture, before being decoded and scaled, from the storage unit 116.

The printer 120 that is the receiver comprises a reception unit 122, a still image generation unit 124, and a still image output unit 126.

The reception unit 122 receives the compressed pictures. The reception unit 122 can receive the compressed pictures by wire/wireless, and in the case of wirelessly receiving the compressed pictures, Bluetooth may be used.

The still image generation unit 124 generates the decompressed original image by decoding the compressed pictures applied from the reception unit 122. In this case, the decoded image corresponds to a still image in the unit of a frame. The output unit outputs the image applied from the still image generation unit 124.

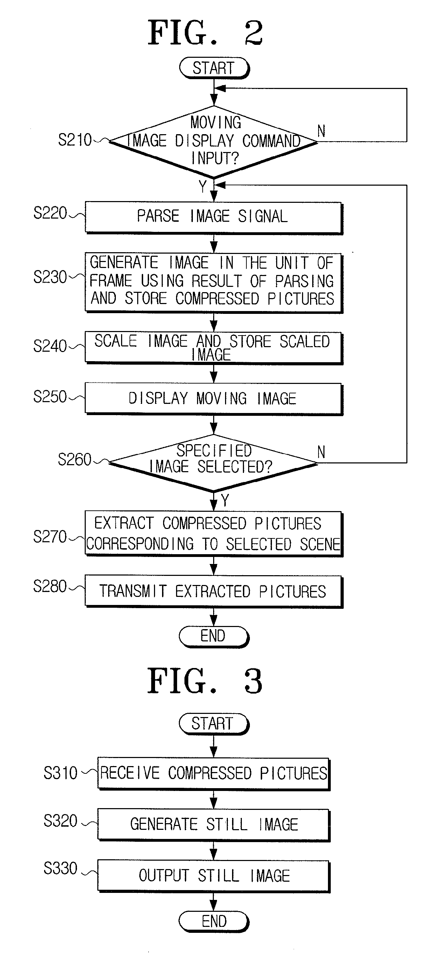

Hereinafter, the operation of the image device 110 as illustrated in Figure 1 will be described in detail with reference to Figure 2.

Figure 2 is a flowchart illustrating a process of transmitting a scene selected from a moving image being reproduced as a still image according to an exemplary embodiment of the present invention.

If a moving image display command is input ("Y" at step (S210)), the parser 111 parses the image signal input to the image device 110 at step (S220).

The decoder 112 generates the image in the unit of a frame by using the result of parsing, and the storage unit 116 stores the compressed pictures by using the result of parsing at step (S230). Specifically, the decoder 112 generates one frame image by decoding the compressed I-picture with reference to the result of parsing, and generates one frame image by decoding the compressed I-picture and P-picture. By contrast, the storage unit 116 receives the same compressed pictures as the pictures applied to the decoding unit from the parser 111 by using the result of parsing, and stores the applied pictures as they are. The compressed pictures may comprise compressed motion pictures, and in particular, Moving Picture Experts Group (MPEG)- encoded compressed pictures.

The scaler 113 converts the size of the image so that the resolution of the decoded frame image coincides with the resolution of the image device 110, and the temporary storage unit 114 for display temporarily stores the scaled image at step S240.

Then, the moving image output unit 115 outputs the scaled image, and the output image is displayed on the display unit at step (S250).

On the other hand, the control unit 119 judges whether a command to select a specified scene from the image being displayed is input at step (S260). Specifically, if a user intends to capture and print a specified scene, i.e., a specified frame image, during viewing the moving image being displayed, he/she selects the specified scene by using a button and so on provided in the manipulation unit 118. In this case, the control unit 119 judges that the command to select the specified scene has been input.

If a command to select a specified scene ("Y" at step (S260)) is input, the control unit 119 extracts the compressed pictures corresponding to the selected scene from the storage unit 116 at step (S270). That is, the selected scene represents an image which is obtained by decoding compressed I-picture and the compressed P-picture into one frame image and subsequently scaling the frame image. The control unit extracts the compressed I-picture and the compressed P-picture, which correspond to the selected scene, but have not yet been decoded, from the storage unit 116. Accordingly, the control unit extracts one or two compressed pictures that correspond to the selected scene.

In addition, the control unit 119 transmits the pictures extracted from the storage unit 116 through the transmission unit 117 at step (S280).

As described above, in comparison to the conventional image device that transmits the selected scene as a still image by JPEG-encoding the image that corresponds to the selected scene stored in the temporary storage unit 114 for display, the image device according to the present invention transmits the compressed pictures corresponding to the selected scene, i.e., the pictures before being decoded, without encoding the displayed image, and thus the data processing time can be reduced. In addition, since the image device according to the present invention does not perform an encoding process for generating a still image, the deterioration of the picture quality of an image can be prevented.

Next, the operation of the printer 120 as illustrated in Figure 1 will be described in detail with reference to Figure 3. Figure 3 is a flowchart illustrating a process of generating a still image using received pictures according to an exemplary embodiment of the present invention.

The reception unit 122 receives compressed pictures at step (S310).

The still image generation unit 124 generates a still image by using the compressed pictures at step (S320). If the received picture is the compressed I-picture, the still image generation unit 124 generates a still image corresponding to one frame by decoding the compressed I-picture. If the received pictures are the compressed I-picture and the compressed P-picture, the still image generation unit 124 generates a still image corresponding to one frame by decoding the I-picture, decoding the P-picture, and then adding the decoded I-picture and the decoded P-picture.

The still image output unit 126 outputs the generated still image at step (S330). As a result, the scene selected by the user is outputted as the still image. Since the image process performed in the printer 120 is similar to the image process performed in the image device 110, almost no difference in picture quality occurs between the image outputted from the printer 120 and the image outputted from the image device 110.

In the exemplary embodiment of the present invention, the I-picture and the P-picture have been described with reference to Figures 1 to 3. However, the present invention is not limited thereto. In the case where the displayed image is an image generated using the I-picture, P-picture, and B-picture, the control unit 119 can extract three pictures, i.e., the compressed I-picture, the compressed P-picture, and the compressed B-picture, from the storage unit 116. Also, the control unit 119 may transmit only a part of the I-picture, P-picture, and B-picture in order to reduce the amount of data being transmitted, and thus the control unit 119 may extract less than three compressed pictures corresponding to the selected scene.

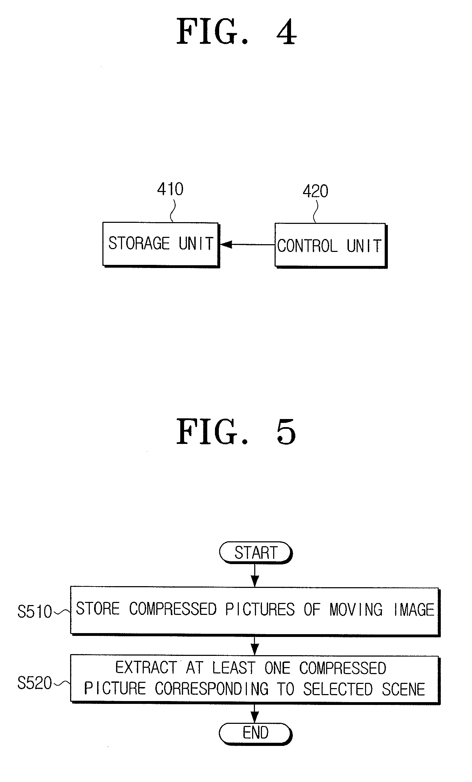

Hereinafter, an image device according to another exemplary embodiment of the present invention will be described with reference to Figures 4 and 5.

As illustrated in Figure 4, the image device according to another exemplary embodiment of the present invention comprises a storage unit 410 and a control unit 420. The storage unit 410 stores the compressed pictures of the moving image, and the control unit 420 extracts at least one compressed picture, which corresponds to the selected scene of the moving image being displayed, from the storage unit 410.

According to the method of extracting pictures that correspond to the selected scene of the moving image as illustrated in Figure 5, the storage unit 410 first stores the compressed pictures of the moving image at step (S510), and the control unit 420 extracts at least one compressed picture that corresponds to the selected scene of the moving image being displayed at step (S520).

Accordingly, the image encoding is not performed in the process of extracting the still image from the moving image, and thus the time for extracting the still image can be reduced with the deterioration of the picture quality of the still image prevented.

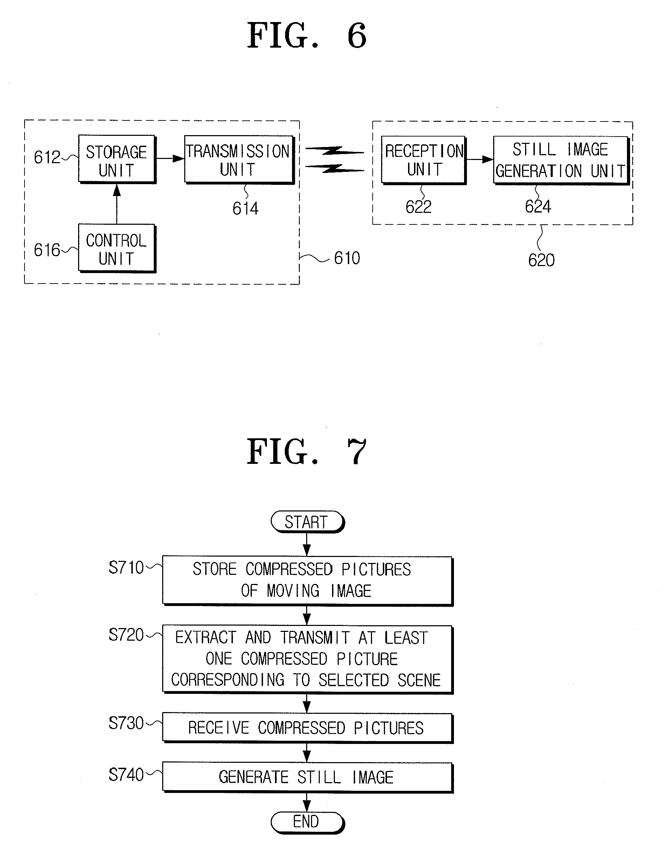

Hereinafter, an image system according to still another exemplary embodiment of the present invention will be described with reference to Figures 6 and 7.

As illustrated in Figure 6, the image system according to another exemplary embodiment of the present invention comprises a transmitter 610 and a receiver 620. The transmitter 610 comprises a storage unit 612, a transmission unit 614, and a control unit 616, and the receiver 620 comprises a reception unit 622 and a still image generation unit 624.

The storage unit 612 stores the compressed pictures of the moving image, and the transmission unit 614 transmits the pictures. The control unit 616 extracts at least one compressed picture, which corresponds to the selected scene of the moving image being displayed, from the storage unit 612, and transmits the extracted pictures through the transmission unit 614.

According to an image transmission method in Figure 7, the storage unit 612 stores the compressed pictures of the moving image at step (S710). The control unit 616 extracts at least one compressed picture, which corresponds to the selected scene of the moving image being displayed, from the storage unit 612, and the transmission unit 614 transmits the extracted pictures at step (S720).

According to an image receiving method in Figure 7, the reception unit 622 receives the extracted pictures at step (S730), and the still image generation unit 624 generates a still image by using the received pictures at step (S740).

As described above, according to the present invention, if a specified scene of a moving image being displayed is captured as a still image, the compressed pictures, which correspond to the specified scene, are extracted and used to generate the still image, and thus the deterioration of the picture quality of the image is minimized with the data processing time reduced.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. An image device comprising:
a storage unit arranged to store compressed data relating to a moving image; and
a control unit arranged to extract a portion of the compressed data from the storage unit, wherein the portion of the compressed data corresponds to a scene selected from the moving image.

2. The image device of claim 1, wherein the compressed data comprises Moving Picture Experts Group (MPEG)-encoded compressed pictures.

3. The image device of claim 1 or 2, further comprising a transmission unit arranged to transmit the extracted portion of data.

4. The image device of claim 1, 2 or 3, wherein the control unit is arranged to extract data relating to less than three compressed pictures that correspond to the selected scene.

5. The image device of claim 4, wherein the control unit is arranged to extract at least one of a compressed I-picture (Intra-coded picture) and a compressed P-picture (Predicted-coded picture), which correspond to the selected scene, if the I-picture and the P-picture are used for displaying the selected scene.

6. The image device of claim 4, wherein, if an I-picture (Intra-coded picture), P-picture (Predicted-coded picture), and a B-picture (Bi-directionally predicted-coded picture) are used to display the selected scene, then the control unit is arranged to extract at least one of the compressed I-picture, the compressed P-picture, and the compressed B-picture, which correspond to the selected scene.

7. An image system comprising a transmitter and a receiver;
wherein the transmitter comprises:
a storage unit for storing compressed pictures forming a moving image;
a transmission unit for transmitting the compressed pictures; and
a control unit for extracting at least one of the compressed pictures, which corresponds to a scene selected from the moving image, from the storage unit, and for controlling the extracted at least one of the compressed picture through the transmission unit; and
wherein the receiver comprises:
a reception unit for receiving the transmitted at least one of the compressed pictures; and
a still image generation unit for generating a still image based on the received at least one of the compressed pictures.

8. A method of controlling an image device, comprising:
storing compressed picture data relating to a moving image; and
extracting at least a portion of the compressed picture data, wherein said portion of data corresponds to a scene selected from the moving image.

9. The method of claim 8, wherein the compressed picture data comprise Moving Picture Experts Group (MPEG)-encoded compressed pictures.

10. The method of claim 8 or 9, further comprising transmitting the extracted at least one portion of the compressed picture data.

11. The method of claim 8, wherein the extracting step comprises extracting data relating to three of fewer compressed pictures that correspond to the selected scene.

12. The method of claim 11, wherein, if an I-picture (Intra-coded picture) and a P-picture (Predicted-coded picture) are used to display the selected scene, then the extracting step comprises extracting at least one of the compressed I-picture and the compressed P-picture, which correspond to the selected scene.

13. The method of claim 11, wherein, if an I-picture (Intra-coded picture), a P-picture (Predicted-coded picture), and a B-picture (Bi-directionally predicted-coded picture) are used to display the selected scene, then the extracting step comprises extracting at least one of the compressed I-picture, the compressed P-picture, and the compressed B-picture, which correspond to the selected scene.

14. A method of transmitting and receiving an image, comprising:
storing compressed pictures of a moving image;
extracting at least one of the compressed pictures, which corresponds to a scene selected from the moving image;
transmitting the extracted at least one of the compressed pictures;
receiving the extracted at least one of the compressed picture; and
generating a still image based on the received at least one of the compressed picture.
